# EUROPEAN PATENT SPECIFICATION

(11) **EP 1 733 543 B1**
(45) Date of publication and mention of the grant of the patent: **27.04.2011**
(21) Application number: 05725889.9
(22) Date of filing: 18.03.2005
(51) Int. Cl.: H04M 1/00

(54) **SENSOR-BASED AUGMENTATION OF BLOCKAGE RECOVERY**
AUF SENSOREN BASIERENDE ERGÄNZUNG DER BLOCKIERUNGS-BEHEBUNG
AUGMENTATION DE RECOUVREMENT DE BLOCAGE A L'AIDE D'UN CAPTEUR

(30) Priority: 19.03.2004 US 554418 P; 30.11.2004 US 998609
(43) Date of publication of application: 20.12.2006
(73) Proprietor: 2201028 Ontario Inc., Ottawa, ON K2K 3G8 (CA)
(72) Inventor: LAFLEUR, Phil, Gloucester, Ontario K1B 4M1 (CA); MCPHERSON, Wayne, Ottawa, Ontario K2C 2A8 (CA); FAULKNER, Sean, Gloucester, Ontario K1T 1E5 (CA); ROSCOE, David, J., Ottawa, Ontario K2K 2L4 (CA)
(74) Representative: Gillard, Matthew Paul
(86) International application number: PCT/US2005/009080
(87) International publication number: WO 2005/094045

(56) References cited:
- US-A- 5 953 677
- US-A- 5 953 677
- US-A- 6 163 690
- US-A1- 2004 203 699

## Description

### Field of the Invention

The present invention is generally related to mobile communications systems and, more particularly, is related to a method for improving long-term blockage recovery of a communication signal.

### Background of the Invention

All mobile communication systems suffer from short-term and long-term blockage. In particular, communication systems requiring line of sight are frequently blocked. An example of short-term blockage is a tunnel. An example of a long-term blockage source is a parking garage. Blockage occurs when the loss introduced by the blockage source exceeds the link margin in the communications system. Depending on the design constraints, a variety of schemes may be used to reestablish the communications link once the blockage source is removed.

One approach is to continually monitor the communications channel, and reestablish communications as soon as the blockage source is removed. That is suitable for short-term blockage and the long-term blockage when power consumption is not important. In many mobile communications applications, however, power consumption is critical. With battery powered devices, long-term blockage could result in permanent blockage if the battery is drained due to a power hungry blockage recovery scheme.

Another approach, intended to overcome that difficulty, is called periodic monitoring. The power consumption constraint in battery-powered applications leads to less frequent monitoring of the channel. That reduces power consumption, and also increases the amount of time required to reestablish communications once the blockage source is removed. Thus, a periodic monitoring approach is not preferred.

In yet another approach, optimized periodic monitoring, one attempts to optimize the monitoring interval based on the amount of time the mobile device has been blocked. That involves monitoring the channel more frequently at first, in the hope that the blockage is only short-term, which is typically more frequent than long-term blockage. That minimizes the amount of time required to reestablish communications once the blockage source is removed for the most frequently encountered scenario. If the device has been blocked for a longer period of time, it reduces the frequency of channel monitoring in an effort to conserve power.

The aforementioned approaches can become quite sophisticated, and can make use of several possible sampling intervals in an effort to optimize the trade-off between power consumption and latency. Those schemes are often based on statistical data specific to the target application, such as long-haul trucking, for example. Having representative statistics allows the designer to optimize the blockage recovery scheme.

Despite the best efforts of the designer, there are some applications where power consumption and latency requirements are outside of the performance envelope that can be achieved using the mentioned blockage recovery schemes. Applications that have very long-term blockage, require low latency, and require low power consumption can be very challenging.

An example of such an application is container shipping. In container shipping, containers are stacked on the ship, resulting in blockage for the duration of the trip. When the ship is unloaded, the containers are often stacked once again in the shipping yard. That leaves a short interval during unloading in which to establish communications and send a report.
An example of one such prior art system can be seen in document US-A-5953677.

### Summary of the Invention

Thus, an unaddressed need exists in the art to address the aforementioned deficiencies and inadequacies associated with improving long-term blockage recovery of a communications signal.

It is therefore an object of the present invention to provide a method for improving long-term blockage recovery of a communications signal.

It is another object of the present invention to reduce power consumption when in long-term blockage.

It is still another object of the present invention to reduce latency when a monitored application is coming out of long-term blockage.

Briefly described, a preferred embodiment of the system, among others, can be implemented as follows. The preferred embodiment improves long-term blockage recovery through the use of application-specific sensors. That differs from blockage recovery techniques described above, in that the long-term blockage scheme goes beyond looking at the time spent in blockage to determine its reaction.

Sensors monitor the most likely blockage sources and/or detect when they are likely to be removed. For example, in container shipping, a proximity sensor could provide information on when the container above the source of blockage had been removed. In a case where a vehicle is parked in a parking garage, an accelerometer or ignition sensor could detect when the vehicle began to move or when the engine was started. In the time following movement or ignition, there is a higher likelihood that the blockage source will be removed. That information could then be used along with information on the time spent in blockage to provide improved recovery from long-term blockage without sacrificing power consumption. Hence, the actual source of the blockage most likely to impact the communications channel for a specific application is measured.

Because monitoring the sensors consumes much less power than monitoring the communications channel, it can be monitored more frequently, possibly continuously, and still ensure low power consumption. That increased monitoring improves the latency because the device knows when it is most likely to come out of long-term blockage.

Other systems, methods, features and advantages of the present invention will be or become apparent to one with skill in the art upon examination of the following drawing and detailed description. It is intended that all such additional systems, methods, features and advantages be included within this description, be within the scope of the present invention, and be protected by the accompanying claims.

### Brief Description of the Drawing

Many aspects of the invention can be better understood with reference to the following drawings. The components in the illustrate the principles of the present invention.

Figure 1 is a state diagram of a preferred embodiment of the invention;

Figure 2 is a block diagram of a communication device in which the preferred embodiment of the present invention is implemented;

Figure 3 shows a use of the preferred embodiment in the context of container shipping; and

Figure 4 shows a use of the preferred embodiment in a motor vehicle.

### Detailed Description of the Preferred Embodiment

A preferred embodiment and two contexts in which it can be used will be disclosed in detail with reference to the drawings, in which like reference numerals refer to like elements throughout.

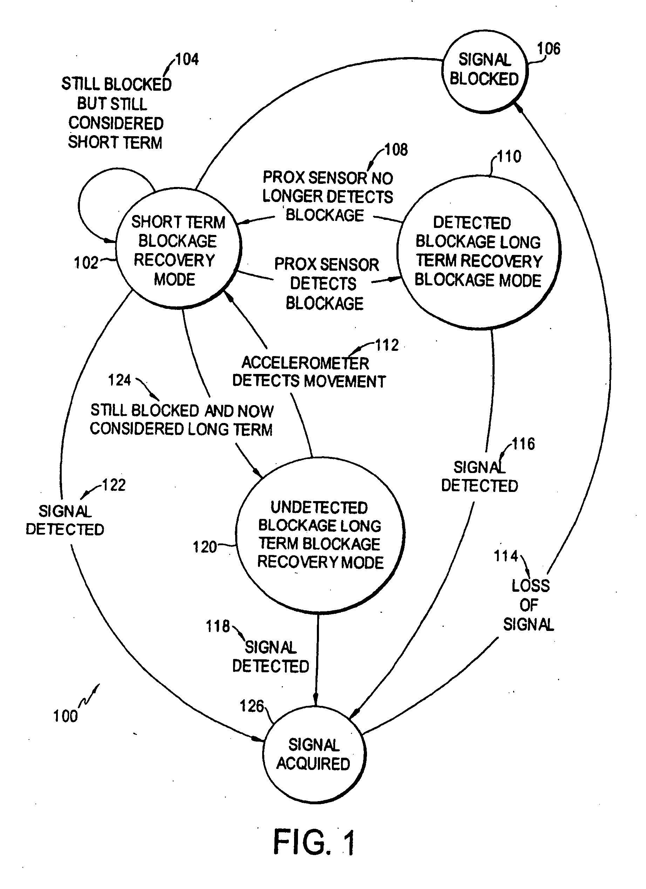

Figure 1 depicts a preferred method 100 for predicting a recovery time to come out of long-term communications signal blockage for a communications signal. In the preferred method 100, one determines whether a signal is blocked 106. Assuming the signal blockage is short-term 102, it is then determined whether the signal is still blocked 104 but may be still considered a short-term blockage 102. Then, using an application-specific sensor that directly measures the presence of a blockage source, such as a proximity sensor 108, it can be determined whether the short-term blockage 102 may be considered as a detected long-term blockage 110. Should the source of blockage be removed, the transition is made from state 110 to 102 via 108. An accelerometer or ignition sensor may determine when the blockage is more likely to end to get out of an undetected blockage state 120.

Assuming that the source of long-term blockage is known, such as a container stacked above the mobile communications terminal thereby blocking the line-of-sight, the current state would be 110. At any time in state 110, should the signal be detected trough periodic sampling, the transition is made to state 126 via 116. Assuming the short-term blockage 102 is still blocked and there is no direct source of blockage detected, the transition is made from 102 to 120 via 124.

At any time in state 120, should the signal be detected through periodic sampling, the transition is made to state 120 via 118. Should an accelerometer or ignition sensor or other sensor detect an increased probability that the mobile communications terminals' position will change (vehicle move) thereby potentially eliminating the source of blockage, the transition is made from state 120 back to 102 via 112. Finally, combining the information obtained from the application-specific sensors with the time spent in the blockage, one can optimize the monitoring of the communications channel to simultaneously minimize latency while conserving energy.

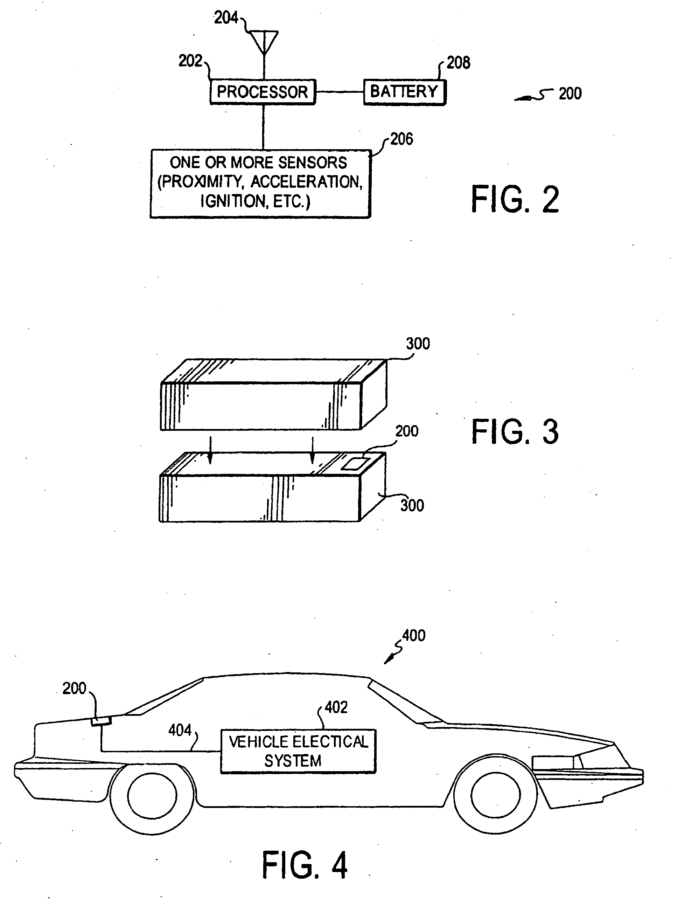

The preferred embodiment could be physically realized as a communication terminal or other device with an integrated proximity sensor and/or integrated accelerometer and/or ignition sensor. An example is shown in Figure 2. As shown in that figure, the communication device 200 includes a processor 202 that controls the operations of the device 200 and that in particular implements the process of Figure 1. In communication with the processor 202 are an antenna 204, one or more sensors (proximity, acceleration, ignition, etc.) 206, and a power source such as a battery 208, as well as any other components which may be needed in any particular application.

Examples of contexts in which the device 200 can be used will be described with reference to Figures 3 and 4. As shown in Figure 3, when one container 300 is stacked on top of another container 300, a communication device 200 on top of the second container 300 experiences a blockage. Therefore, the communication device 200 might use a proximity sensor (not shown in Fig. 3, but corresponding to the one or more sensors 206 of Fig. 2) to detect the removal of a stacked container 300 and an accelerometer (not shown in Fig. 3, but corresponding to the one or more sensors 206 of Fig. 2) to detect when it is being moved which would predict when long-term blockage might end.

The preferred embodiment can be used in a motor vehicle in the manner shown in Figure 4. In a vehicle 400, ignition sensing is readily achieved by connecting the communication device 200 to the vehicle's electrical system 402 via a cable harness 404. The sensor suite (not shown in Fig. 4, but corresponding to the one or more sensors 206 of Fig. 2) used would depend on the application and the anticipated types of blockage. For example, a vehicle tracking system that is already connected to the vehicle's electrical system could use ignition sensing capability to predict when long-term blockage, which is most likely when the vehicle is stationary, might end. An example of long-term blockage could occur when the vehicle 400 is parked in a parking garage; in that case, the long-term blockage is likely to end when the vehicle is started. In the vehicle context, the power source can be a battery, a connection to draw power from the vehicle's battery, or any other suitable power source.

It is very important to realize that when a short-term blockage state 102 has ended with a signal detection 122, this will be immediately recognized as an acquired signal 126. Hence, there is a minimal amount of time, and a minimal amount of power consumption when the present invention is used to determine and predict whether the communications signal has experienced a long-term blockage.

Sensor-based augmentation of blockage recovery can improve performance in applications with frequent long-term blockage. Monitoring the application-specific sensors consumes much less power than monitoring a communications channel as done in the prior art.

It should be emphasized that the above-described embodiments of the present invention, particularly, any preferred embodiments, are merely possible examples of implementations, merely set forth for a clear understanding of the principles of the invention. Many variations and modifications may be made to the above-described embodiment of the invention which are to be included herein within the scope of the following claims.

## Claims

1. A method for improving long-term blockage recovery of a communications signal, said method comprising the steps of:
monitoring a blockage source using at least one application-specific sensor that directly measures the source of the blockage;
ascertaining time spent in blockage; and
predicting a likely blockage recovery interval from an output of the at least one application-specific sensor, **characterised in that** the at least one application-specific sensor comprises a proximity sensor.

2. The method according to claim 1, further comprising combining information obtained from at least one application-specific sensor with the time spent in the blockage and predicting a likely blockage recovery interval.

3. The method according to claim 1, wherein the at least one application-specific sensor detects when static blockage conditions are likely to change.

4. The method according to claim 3, wherein the at least one application -specific sensor is an accelerometer.

5. The method according to claim 3, wherein the at least one application-specific sensor is a vehicle ignition sensor.

6. The method according to claim 1, further comprising the step of determining whether blockage is short-term or long-term.

7. The method according to claim 1, comprising the step of monitoring the blockage source using a plurality of application-specific sensors.

8. The method according to claim therein the plurality of application-specific sensors is a mixture of proximity sensors, ignition sensors and accelerometers.

9. A communication device for communicating over a signal and for recovering from a blockage in the signal, the communication device comprising:
an antenna for communicating over the signal;
at least one application-specific sensor for monitoring a source of the blockage in the signal;
a power source for the communication device; and
a processor, in communication with the antenna, the at least one application-specific sensor, and the power source, for predicting a likely blockage recovery interval from an output of the at least, one application-specific sensor, **characterised in that** the at least one application-specific sensor comprises a proximity sensor.

10. The communication device according to claim 9, wherein the processor predicts the likely blockage recovery interval further in accordance with time spent in blockage.

11. The communication device according to claim 9, wherein the at least one application-specific sensor comprises an acceleration sensor.

12. The communication device according to claim 9, wherein the at least one application-specific sensor comprises an ignition sensor.

13. The communication device according to claim 9, wherein the ignition sensor comprises a connection to a vehicle electrical system.

14. The communication device according to claim 13, wherein the connection is over a cable harness.

## Patentansprüche

1. Verfahren zum Verbessern langfristiger Blockierungsbehebung eines Kommunikationssignals, das Verfahren die folgenden Schritte umfassend:
Überwachen einer Blockierungsquelle unter Verwendung mindestens eines anwendungsspezifischen Sensors, der die Quelle der Blockierung direkt misst;
Ermitteln der Zeit, die in Blockierung verbracht wurde; und
Prädizieren eines wahrscheinlichen Blockierungsbehebungsintervalls von einem Ausgang des mindestens einen anwendungsspezifischen Sensors, **dadurch gekennzeichnet, dass** der mindestens eine anwendungsspezifische Sensor einen Näherungssensor umfasst.

2. Verfahren nach Anspruch 1, weiter umfassend, Informationen, die von mindestens einem anwendungsspezifischen Sensor erhalten wurden, mit der Zeit, die in der Blockierung verbracht wurde, zu kombinieren und ein wahrscheinliches Blockierungsbehebungsintervall zu prädizieren.

3. Verfahren nach Anspruch 1, wobei der mindestens eine anwendungsspezifische Sensor detektiert, wann statische Blockierungsbedingungen sich wahrscheinlich ändern werden.

4. Verfahren nach Anspruch 3, wobei der mindestens eine anwendungsspezifische Sensor ein Beschleunigungsmesser ist.

5. Verfahren nach Anspruch 3, wobei der mindestens eine anwendungsspezifische Sensor ein Fahrzeugzündungssensor ist.

6. Verfahren nach Anspruch 1, weiter umfassend den Schritt zum Bestimmen, ob Blockierung kurzfristig oder langfristig ist.

7. Verfahren nach Anspruch 1, weiter umfassend den Schritt zum Überwachen der Blockierungsquelle unter Verwendung einer Vielzahl von anwendungsspezifischen Sensoren.

8. Verfahren nach Anspruch 7, wobei die Vielzahl von anwendungsspezifischen Sensoren eine Mischung auf Näherungssensoren, Zündungssensoren und Beschleunigungsmessern ist.

9. Kommunikationsvorrichtung zum Kommunizieren über ein Signal und zum Beheben einer Blockierung in dem Signal, die Kommunikationsvorrichtung umfassend:
eine Antenne zum Kommunizieren über ein Signal;
mindestens einen anwendungsspezifischen Sensor zum Überwachen einer Quelle der Blockierung in dem Signal;
eine Energiequelle für die Kommunikationsvorrichtung; und
einen Prozessor in Kommunikation mit der Antenne, dem mindestens einen anwendungsspezifischen Sensor und der Energiequelle zum Prädizieren eines wahrscheinlichen Blockierungsbehebungsintervalls von einem Ausgang des mindestens einen anwendungsspezifischen Sensors, **dadurch gekennzeichnet, dass** der mindestens eine anwendungsspezifische Sensor einen Näherungssensor umfasst.

10. Kommunikationsvorrichtung nach Anspruch 9, wobei der Prozessor das wahrscheinliche Blockierungsbehebungsintervall weiterhin gemäß der in Blockierung verbrachten Zeit prädiziert.

11. Kommunikationsvorrichtung nach Anspruch 9, wobei der mindestens eine anwendungsspezifische Sensor einen Beschleunigungssensor umfasst.

12. Kommunikationsvorrichtung nach Anspruch 9, wobei der mindestens eine anwendungsspezifische Sensor einen Zündungssensor umfasst.

13. Kommunikationsvorrichtung nach Anspruch 9, wobei der Zündungssensor eine Verbindung zu einem fahrzeugelektrischen System umfasst.

14. Kommunikationsvorrichtung nach Anspruch 13, wobei die Verbindung über einen Kabelbaum besteht.

## Revendications

1. Procédé destiné à améliorer un recouvrement de blocage à long terme d'un signal de communication, ledit procédé comportant les étapes ci-dessous consistant à :
surveiller une source de blocage en utilisant au moins un capteur spécifique à une application, lequel mesure directement la source du blocage ;
déterminer le temps de blocage occasionné ; et
prédire un intervalle probable de recouvrement de blocage à partir d'une sortie dudit au moins un capteur spécifique à une application, **caractérisé en ce que** ledit au moins un capteur spécifique à une application comporte un capteur de proximité.

2. Procédé selon la revendication 1, comprenant en outre l'étape consistant à associer les informations obtenues à partir d'au moins un capteur spécifique à une application au temps de blocage occasionné, et l'étape consistant à prédire un intervalle probable de recouvrement de blocage.

3. Procédé selon la revendication 1, dans lequel ledit au moins un capteur spécifique à une application détecte lorsque des états de blocage statique sont susceptibles de changer.

4. Procédé selon la revendication 3, dans lequel ledit au moins un capteur spécifique à une application est un accéléromètre.

5. Procédé selon la revendication 3, dans lequel ledit au moins un capteur spécifique à une application est un capteur d'allumage de véhicule.

6. Procédé selon la revendication 1, comprenant en outre l'étape consistant à déterminer si le blocage est à court terme ou à long terme.

7. Procédé selon la revendication 1, comprenant l'étape consistant à surveiller la source de blocage en utilisant une pluralité de capteurs spécifiques à une application.

8. Procédé selon la revendication 7, dans lequel la pluralité de capteurs spécifiques à une application est un mélange de capteurs de proximité, de capteurs d'allumage et d'accéléromètres.

9. Dispositif de communication destiné à communiquer par le biais d'un signal et destiné au recouvrement d'un blocage dans le signal, le dispositif de communication comprenant :
une antenne pour communiquer par le biais d'un signal ;
au moins un capteur spécifique à une application pour surveiller une source de blocage dans le signal ;
une source d'alimentation destinée au dispositif de communication ; et
un processeur, en communication avec l'antenne, ledit au moins un capteur spécifique à une application, et la source d'alimentation, pour prédire un intervalle probable de recouvrement de blocage à partir d'une sortie dudit au moins un capteur spécifique à une application, **caractérisé en ce que** ledit au moins un capteur spécifique à une application comporte un capteur de proximité.

10. Dispositif de communication selon la revendication 9, dans lequel le processeur prédit l'intervalle probable de recouvrement de blocage en outre selon le temps de blocage occasionné.

11. Dispositif de communication selon la revendication 9, dans lequel ledit au moins un capteur spécifique à une application comporte un capteur d'accélération.

12. Dispositif de communication selon la revendication 9, dans lequel ledit au moins un capteur spécifique à une application comporte un capteur d'allumage.

13. Dispositif de communication selon la revendication 9, dans lequel le capteur d'allumage comprend une connexion à un système électrique de véhicule.

14. Dispositif de communication selon la revendication 13, dans lequel la connexion utilise un faisceau de câbles.
